# EUROPEAN PATENT SPECIFICATION

(11) **EP 1 480 858 B1**
(45) Date of publication and mention of the grant of the patent: **20.10.2010**
(21) Application number: 02706473.2
(22) Date of filing: 28.02.2002
(51) Int. Cl.: B60S 1/08

(54) **MOISTURE DETECTION SYSTEM AND METHOD OF USE THEREOF**
FEUCHTIGKEITSDETEKTIONSSYSTEM UND METHODE SEINER VERWENDUNG
SYSTEME DE DETECTION D'HUMIDITE ET MODE D'EMPLOI

(43) Date of publication of application: 01.12.2004
(73) Proprietor: PPG Industries Ohio, Inc., Cleveland, OH 44111 (US)
(72) Inventor: BARGUIRDJIAN, Pascal, F-35400 Saint Malo (FR); HAIGRON, Michel, F-35400 Saint Malo (FR)
(74) Representative: Polypatent
(86) International application number: PCT/US2002/006163
(87) International publication number: WO 2003/074334

(56) References cited:
- EP-A- 0 308 990
- US-A- 3 826 979
- US-A- 4 428 232
- US-A- 4 703 237
- US-A- 4 748 390
- US-A- 5 602 333
- US-A- 5 672 976

## Description

### BACKGROUND OF THE INVENTION

### 1. Field of the Invention

The present invention relates to moisture detection on substrate and, more particularly, to moisture detection on a vehicle windshield.

### 2. Description of the Prior Art

Heretofore, the detection of moisture on a windshield of a vehicle was accomplished in four basic manners. Namely, capacitive sensor systems, resistive sensor systems, ultrasonic sensor systems and optical sensor systems.

A capacitive sensor system includes a capacitor formed on the windshield. In response to moisture on the windshield, the capacitance of the capacitor changes. A sensing circuit is connected to detect the changing capacitance and to control the operation of a windshield wiper as a function of the changing capacitance. Examples of capacitive moisture sensors include U.S. Patent Nos. 5,668,478 to Buschur; 5,682,788 to Netzer; 5,801,307 to Netzer; and 6,094,981 to Hochstein.

A resistive measurement system includes two conductive elements disposed in spaced relation on the windshield, or another part of the vehicle, such as a conventional whip antenna. Circuitry coupled to the conductive elements measures a change in resistance thereof in response to water bridging the resistive elements and controls the operation of the windshield wiper as a function of the change in resistance. Examples of resistive measurement systems include U.S. Patent Nos. 5,659,294 to Schroder; 5,598,146 to Schroder; 5,780,718 to Weber; 5,780,719 to VanDam; 5,783,743 to Weber; and 5,900,821 to Petzold.

An ultrasonic sensor system includes a transducer which emits an ultrasonic signal toward a first face of a sheet and receives a reflected ultrasonic signal on a second face of the sheet. The variation in the reflected signal is utilized to determine the presence or absence of foreign bodies on the second face of the sheet. Examples of ultrasonic sensor systems include U.S. Patent No. 5,818,341 to Saurer et al. and European Publication No. EP0638822.

An optical sensor system includes a light detector positioned to detect light reflected off a windshield from a light source. In response to the presence of moisture on the windshield, the amount of light detected by the light sensor will change due to changing reflection of the light from the light source, thus causing a change in the output of the light sensor. Detecting circuitry detects the change in output from the light detector in response to the change in light impinging thereon and operates the windshield wiper as a function of the change. Examples of light detecting systems include U.S. Patent Nos. 5,694,012 to Pientka et al.; 5,990,647 to Zettler; 6,052,196 to Pientka et al.; 6,066,933 to Ponziana; 6,084,519 to Coulling et al.; 6,207,967 to Hochstein; 5,661,303 to Teder; 6,250,148 to Lynam; 6,218,741 to Braun et al.; and 6,232,603 to Nelson.

US 4,703,237 discloses a rain sensor for selectively supplying power from a constantly available power source to a wiper means to remove moisture from a vehicle window. A passive circuit is supported on the window and has an initial self-resonant frequency to sense moisture. A generating means creates an electromagnetic field having a range of frequencies wherein the initial self-resonant frequency is within the range of frequencies. The actuation of the wiper means is initiated by wiping control circuit coupling to a passive circuit means. Moisture exhibits a high dielectric constant wherein the glass of the window or windshield, respectively, has a very low dielectric constant such that the capacitance produced by the passive circuit means is a function of the dielectric constant of the substrate or glass and the thickness. The wiping control circuit includes a detecting means which detects coupling between a generating means and the passive circuit means to produce a proportional signal indicative of the degree of shifting of the resonant frequency due to moisture away from the initial self-resonant frequency producing a proportional signal. The wiping control circuit includes the generating means which is used to generate the electric-magnetic field at a single predetermined frequency which is equal to the initial self-resonant frequency to the passive circuit. The generating means includes an exciting oscillator tank for coupling to the passive circuit when energized. The tank coil couples to the passive circuit by induction. Slight variations in the capacitance of the passive circuit change the self-resonant frequency by significant measurable amounts. A detecting means used to detect the magnitude of coupling between the generating means and the passive circuit means produces the proportional signal indicative of the degree of shift of the self-resonant frequency due to moisture away from the initial self-resonant frequency. The base drive of an oscillator transistor is derived from the oscillator tank and when energy is coupled out of the oscillator tank through inductive coupling with the passive circuit means, the emitter of the oscillator transistor undergoes a proportionate decrease. The radio frequency voltage at the emitter of the oscillator transistor varies proportionately with the degree of moisture present on the passive circuit means causing a shift in the self-resonant frequency therein.

A problem with a capacitive sensor system includes the need to form a capacitor having sufficient capacitance whereupon the change in capacitance in response to the presence of rain on the windshield can be detected by suitable detection circuitry. Another problem with a capacitive sensor system is the change in capacitance due to heating or cooling of the metal films forming the capacitor thereby resulting in a change in the capacitance of the capacitor during use.

A problem with a resistive sensor system includes the need to have the resistive elements formed on the outer surface of the windshield whereupon the resistive elements are exposed to weather and possible deterioration. In addition, the resistive elements of a resistive sensor system are also subject to changes in resistance due to changes in the temperature.

A problem with an ultrasonic sensor system and an optical sensor system includes the need to position the transducer of the ultrasonic sensor system and the light transmitter and light receiver of the optical sensor system inside the vehicle to detect the presence of moisture at a suitable vocation on the windshield. However, positioning the ultrasonic sensor system or the optical sensor system at a suitable location on the windshield often results in partially blocking a driver's view through the windshield or in the positioning of such sensor system at less than an optimal location for detecting the presence of moisture on the windshield. Moreover, the sensitivity of an optical sensor to detect moisture can be compromised by the color or shade of the windshield in the path of the light propagating from the light transmitter to the light receiver.

It is, therefore, an object of the present invention to overcome the above problems and others by providing a moisture detection system having a small, essentially invisible, sensor mounted on a substrate, such as a windshield, circuitry for stimulating the sensor, and detection circuitry for detecting a change in the resonant frequency of the sensor due to the presence of moisture on the substrate and, more particularly, the amount of moisture on the substrate. It is also an object of the present invention to provide a method for detecting the presence of moisture on a substrate by detecting a change in the resonant frequency of a sensor. Still other objects will become apparent to those of ordinary skill in the art upon reading and understanding the following detailed description.

### SUMMARY OF THE INVENTION

Accordingly, we have invented a moisture detection system that includes an electrical conductor mounted on a substrate, such as a windshield. The electrical conductor has a resonant frequency that varies as a function of moisture on the substrate adjacent the electrical conductor. An electronic circuitry directly connected to the electrical conductor to stimulate and detect response of the electrical conductor, the electronic circuitry comprises the following elements. An oscillator outputs an oscillator signal at a predetermined amplitude and a predetermined frequency. A resonator circuit is coupled to the electrical conductor and is responsive to the oscillator signal for outputting a resonator signal having an amplitude related to the resonant frequency of the electrical conductor. A filter circuit is responsive to the resonator signal for outputting a rectified and filtered signal. An analog-to-digital converter is responsive to the rectified and filtered signal for outputting a digital signal related to the rectified and filtered signal. Lastly, a controller is responsive to the digital signal for causing a system to operate in accordance with the digital signal.

Preferably, the system is a wiper system which is responsive to the controller for adjusting when the wiper system wipes moisture from the substrate as a function of the amount of moisture on the substrate and/or a rate moisture is received on the substrate.

The substrate can be a vehicle windshield having a plurality of glass sheets laminated together with the electrical conductor sandwiched between the glass sheets. The predetermined frequency is preferably between 300 and 700 kHz and, more preferably, between 400 and 600 kHz.

The resonator circuit can include a tank circuit having a capacitor and inductor connected in parallel between the electrical conductor and a reference voltage, and a resistor connected between the oscillator and the electrical conductor side of the tank circuit. The filter circuit can include a diode connected to conduct current from the resonator toward the analog-to-digital converter and a capacitor connected between an end of the diode adjacent the analog-to-digital converter and the reference voltage.

We have also invented a method of moisture detection. The method includes providing a substrate having an electrical conductor disposed thereon. The electrical conductor is stimulated with an oscillator signal in the absence of moisture on the substrate adjacent the electrical conductor; the oscillator signal having a predetermined amplitude and a predetermined frequency. A first amplitude of the response of the electrical conductor to this stimulation is determined. Next, the electrical conductor is stimulated with the oscillator signal when moisture is present on the substrate adjacent the electrical conductor; the oscillator signal having a predetermined amplitude and a predetermined frequency. A second amplitude of the response of the electrical conductor to this stimulation is determined. The second amplitude is different than the first amplitude due to a change in the resonant frequency of the electrical conductor in response to the addition of moisture on the substrate adjacent the electrical conductor. Lastly, a difference is determined between the first amplitude and the second amplitude, wherein the difference is related to the amount of moisture on the substrate adjacent the electrical conductor, wherein the steps mentionned above are performed by an electronic circuitry directly connected to the electrical conductor.

The method can also include causing moisture to be wiped from the substrate at a rate related to the difference.

Lastly, we have invented a fluid reservoir with a moisture detection system according to claim 1 that includes an electrical conductor disposed on the fluid reservoir, and an electronic circuitry directly connected to the electrical conductor to stimulate and detect response of the electrical conductor, the electronic circuitry comprising the following means. A means for stimulating stimulates the electrical conductor with an oscillator signal and a means responsive to the oscillator signal and the electrical conductor detects a change in a resonant frequency of the electrical conductor related to a level of fluid in the fluid reservoir and outputs a control signal when the detected change in the resonant frequency of the electrical conductor corresponds to less than a desired level of fluid in the fluid reservoir.

### BRIEF DESCRIPTION OF THE DRAWINGS

Fig. 1 is a plan view of a substrate, such as sheet of glass of a windshield, including an electrical conductor utilized for detecting moisture on the substrate;

Fig. 2 is a cross section taken along lines II - II in Fig. 1;

Fig. 3 is a schematic drawing of circuitry utilized to stimulate and detect the response of the electrical conductor shown in Fig. 1;

Fig. 4 is a schematic drawing of the windshield wiper system shown in Fig. 3;

Figs. 5a-5d show alternate embodiments of the electrical conductor shown in Fig. 1; and

Fig. 6 is an isolated perspective view of a fluid reservoir for a vehicle including the electrical conductor shown in Fig. 1.

### DETAILED DESCRIPTION OF THE PREFERRED EMBODIMENTS

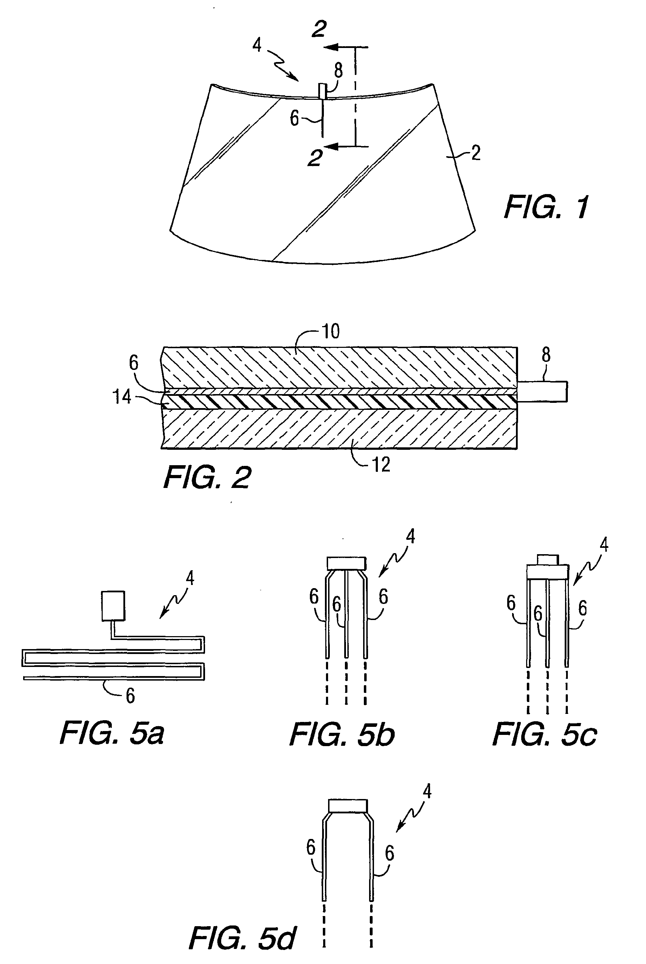

With reference to Fig. 1, a substrate, e.g., a sheet or panel of optically transparent material, such as a sheet of glass or a vehicle windshield 2, includes an antenna 4 disposed thereon. Antenna 4 includes one or more electrical conductors 6 connected to a conductive foil 8 which is utilized for connecting electronic circuitry to electrical conductor 6. In the embodiment shown in Fig. 1, foil 8 is shown extending outside the periphery of windshield 2. However, this is not to be construed as limiting the invention since foil 8 may be disposed within the periphery of windshield 2.

With reference to Fig. 2, and with continuing reference to Fig. 1, windshield 2 is formed by outer and inner glass plies 10 and 12 bonded together by a plastic interlayer 14, preferably polyvinylbutyral, to form windshield 2 as a unitary structure. Plies 10 and 12, however, may be other transparent rigid material, such as polycarbonate. Electrical conductor 6 is preferably sandwiched between glass plies 10 and 12 and, more preferably, between glass ply 10 and plastic interlayer 14. Electrical conductor 6 can be a conductive wire or sheet, a conductive coating applied to one of the surfaces of windshield 2 in the form of a line or a sheet, or a dispersion of electrically conductive particles applied to one of the surfaces of windshield 2 in the form of a line or a sheet. Preferably, electrical conductor 6 has a width and/or thickness whereby it is essentially invisible to the naked eye.

Electrical conductor 6 is preferably disposed on one of the inward facing surfaces of glass ply 10 or glass ply 12. However, electrical conductor 6 can be disposed on an outward facing surface of glass ply 10 or glass ply 12.

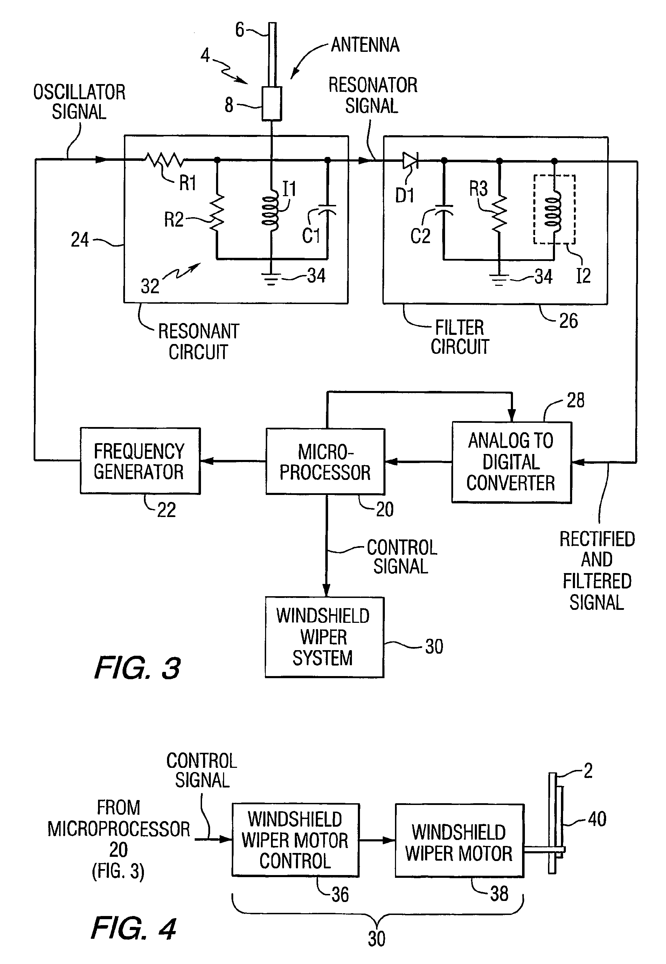

With reference to Fig. 3 and with continuing reference to Figs. 1 and 2, the electronic circuitry coupled to antenna 4 via foil 8 includes a microprocessor 20, a frequency generator 22, a resonant circuit 24, a filter circuit 26, and an analog-to-digital converter 28. A windshield wiper system 30 is connected to receive from microprocessor 20 one or more control signals which control the operation of windshield wiper system 30 in a manner to be described hereinafter.

Microprocessor 20 is interfaced with certain electronic hardware, such as ROM memory, RAM memory, I/O buffers, clock circuitry, and the like, which have not been included in Fig. 3 for simplicity of illustration. Microprocessor 20 operates under the control of a software program stored in a memory connected to microprocessor 20. Under the control of this software program, microprocessor 20 causes frequency generator 22 to output an oscillator signal having a predetermined amplitude and a predetermined frequency. Preferably, this predetermined frequency is between 300 kHz and 700 kHz and, more preferably, between 400 kHz and 600 kHz. The oscillator signal is supplied to resonant circuit 24 which is coupled to antenna 4. In response to receiving the oscillator signal, resonant circuit 24 outputs a resonator signal having an amplitude related to the resonant frequency of antenna 4.

Resonant circuit 24 includes a resistor R1 which isolates the oscillator signal from the resonator signal. Resonant circuit 24 also includes a tank circuit 32 connected between antenna 4 and a reference voltage 34, such as ground, on a side of resistor R1 opposite frequency generator 22. Preferably, tank circuit 32 is configured to resonate at the predetermined frequency of the oscillator signal. Tank circuit 32 includes a resistor R2, an inductor I1 and a capacitor C1 connected in parallel between antenna 4 and reference voltage 34.

Filter circuit 26 includes a diode D1 connected to conduct the resonator signal from resonant circuit 24 toward analog-to-digital converter 28. A capacitor C2 and a resistor R3 are connected in parallel between a side of diode D1 opposite resonant circuit 24 and reference voltage 34. Optionally, an inductor I2 is connected in parallel with capacitor C2 and resistor R3. The output of filter circuit 26 is a rectified and filtered signal which is supplied to analog-to-digital converter 28. Under the control of microprocessor 20, analog-to-digital converter 28 samples the rectified and filtered signal and converts it into an equivalent digital signal which is sampled by microprocessor 20.

In order to detect the presence of moisture on windshield 2, microprocessor 20 initially causes frequency generator 22 to generate the oscillator signal when no moisture is present on an outward facing surface of windshield 2. Microprocessor 20 then determines the response of antenna 4 to the oscillator signal by sampling a first digital signal output by analog-to-digital converter 28 when antenna 4 is receiving the oscillator signal. Microprocessor 20 stores this first digital signal for future use.

Next, when moisture, e.g., condensed or diffused liquid such as water, is present on an outward facing surface of windshield 2, microprocessor 20 samples a second digital signal output by analog-to-digital converter 28 when antenna 4 receiving the oscillator signal.

It has been observed that the rectified and filtered signal output by filter circuit 26 has a different amplitude when moisture is present on windshield 2 adjacent antenna 4. More specifically, the rectified and filtered signal output by filter circuit 26 has an amplitude that increases or decreases to a limit with increasing moisture on windshield 2 adjacent antenna 4. For example, in the absence of moisture on windshield 2 adjacent antenna 4, the rectified and filtered signal has a first amplitude. However, when moisture in the form of droplets of water is received on windshield 2 adjacent antenna 4, the rectified and filtered signal output by filter circuit 26 has a second amplitude different than the first amplitude. Furthermore, when moisture in the form of diffused water is received on windshield 2 adjacent antenna 4, the rectified and filtered signal output by filter circuit 26 has a third amplitude different than the second amplitude.

This changing amplitude is caused by the impedance of antenna 4, at the predetermined frequency of the oscillator signal, changing in response to changes in the resonant frequency of antenna 4 due to increasing amounts of moisture on windshield 2 adjacent antenna 4. More specifically, the resonant frequency of antenna 4 increases in response to increasing moisture on windshield 2 adjacent antenna 4. Thus, for example, if the predetermined frequency of the oscillator signal is selected to equal the resonant frequency of antenna 4 when diffused liquid is present on windshield 2 adjacent antenna 4, when the amount of moisture on windshield 2 adjacent antenna 4 increases from no moisture to diffused liquid the impedance of antenna 4 decreases whereupon the amplitude of the rectified and filtered signal output by filter circuit 26 decreases. Similarly, for example, if the predetermined frequency of the oscillator signal is selected to equal the resonant frequency of antenna 4 when no moisture is present on windshield 2 adjacent antenna 4, when the amount of moisture on windshield 2 adjacent antenna 4 increases from no moisture to diffused liquid the impedance of antenna 4 increases whereupon the amplitude of the rectified and filtered signal output by filter circuit 26 increases. Thus, depending on relation of the predetermined frequency of the oscillator signal to the resonant frequency of antenna 4, the rectified and filtered signal output by filter circuit 26 can either increase or decrease in amplitude.

Preferably, the electronic circuitry coupled to antenna 4 having electrical conductor 6 sandwiched between glass plies 10 and 12 is capable of detecting changes in the resonant frequency of antenna 4 due to changes in the moisture on windshield 2 between no moisture and diffused liquid. It has been observed, however, that dew or mist on a surface of windshield 2 is best detected when electrical conductor 6 is disposed on the surface of windshield 2 receiving the dew or mist.

Next, microprocessor 20 compares the first digital signal, corresponding to the rectified and filtered signal output by filter circuit 26 in the absence of moisture on windshield 2 adjacent antenna 4, to the second digital signal, corresponding to the rectified and filter signal output by filter circuit 26 when moisture, e.g., condensed liquid, such as dew, mist or droplets of water, or diffused liquid, such as diffused water, is present on windshield 2 adjacent antenna 4, to determine the amount of moisture that is present on windshield 2 adjacent antenna 4. More specifically, microprocessor 20 takes the difference between the first and second digital signals and determines therefrom an amount of moisture that is present on windshield 2 adjacent antenna 4. Based on this determination, microprocessor 20 outputs a control signal to windshield wiper system 30 for controlling the operation thereof based on the amount of moisture on windshield 2.

With reference to Fig. 4 and with continuing reference to all previous figures, windshield wiper system 30 includes a windshield wiper motor control 36 which receives the control signal from microprocessor 20, and a windshield wiper motor 38 which is coupled to a windshield wiper blade 40 disposed on windshield 2. As discussed above, the control signal supplied by microprocessor 20 to windshield wiper motor control 36 is related to the difference between the first and second digital signals sampled by microprocessor 20. In order to control windshield wiper system 30 in accordance with the amount of moisture on windshield 2 adjacent antenna 4, the numerical range of digital difference values that can be processed by microprocessor 20 is divided into sections based on the desired control of windshield wiper system 30. For example, if the range of digital difference values is divided into two sections, the section corresponding to the upper numerical range of difference values corresponds to operating windshield wiper system 30 at a high speed while the lower numerical range of difference values corresponds to operating windshield wiper system 30 at a low speed. Thus, if a difference value between a current sample of the second digital signal and the first digital signal is within the upper numerical range of difference values, microprocessor 20 outputs the control signal which causes windshield wiper motor control 36 to control windshield wiper motor 38 to operate windshield wiper blade 40 at a high speed. Similarly, if the difference value between the current sample of the second digital signal and the first digital signal is within the lower numerical range of difference values, microprocessor 20 outputs the control signal which causes windshield wiper motor control 36 to control windshield wiper motor 38 to operate windshield wiper blade 40 at a low speed.

Various other modes of operation of windshield wiper system 30 can also be enabled by microprocessor 20 and windshield wiper motor control 36 as a function of the difference value between a current sample of the second digital signal and the first digital signal. These modes can include a single pulse mode where windshield wiper blade 40 is caused to wipe windshield 2 once, e.g., to remove dew or mist from windshield 2; a continuous duty cycle pulse mode, e.g., where there is a steady accumulation of water droplets on windshield 2, but the accumulation is not sufficient enough to warrant operation of windshield wiper system 30 at the low speed; and a variable duty cycle pulse mode where wiping of windshield 2 by windshield wiper blade 40 varies as a function of the amount and/or rate of moisture accumulation on windshield 2.

Microprocessor 20 is preferably configured to output two or more different control signals which cause windshield wiper system 30 to implement two or more of the above modes of operation in response to varying amounts of moisture on windshield 2. Lastly, in the absence of moisture on windshield 2, microprocessor 20 causes windshield wiper system 30 to either discontinue or not initiate the wiping of windshield 2 with windshield wiper blade 40.

With reference to Fig. 5a-5d, various different embodiments of antenna 4 are illustrated. In the embodiment of antenna 4 shown in Fig. 5a, electrical conductor 6 is formed in a serpentine pattern. In Figs. 5b and 5c, three parallel electrical conductors 6 are positioned in spaced relation. As indicated by the dashed extensions of electrical conductors 6 in Figs. 5b and 5c, electrical conductors 6 can be formed to any desired length. Lastly, in Fig. 5d, two parallel electrical conductors 6 are positioned in spaced relation. Again, the dash lines extending from electrical conductors 6 in Fig. 5d indicate that electrical conductors 6 can have any desired length.

The present invention has several advantages over prior art systems for detecting moisture. These advantages include antenna 4 being essentially invisible to the naked eye from about one meter; antenna 4 can be disposed in a clear or nontransparent part of windshield 2; antenna 4 is not sensitive to dirt; antenna 4 can detect the presence of moisture over a larger area than prior art sensors of comparable size; antenna 4 is useful with substrates of various thickness and composition; and the present invention can detect the presence of moisture droplets of smaller size, e.g. dew or mist, on windshield 2 than the prior art systems for detecting moisture.

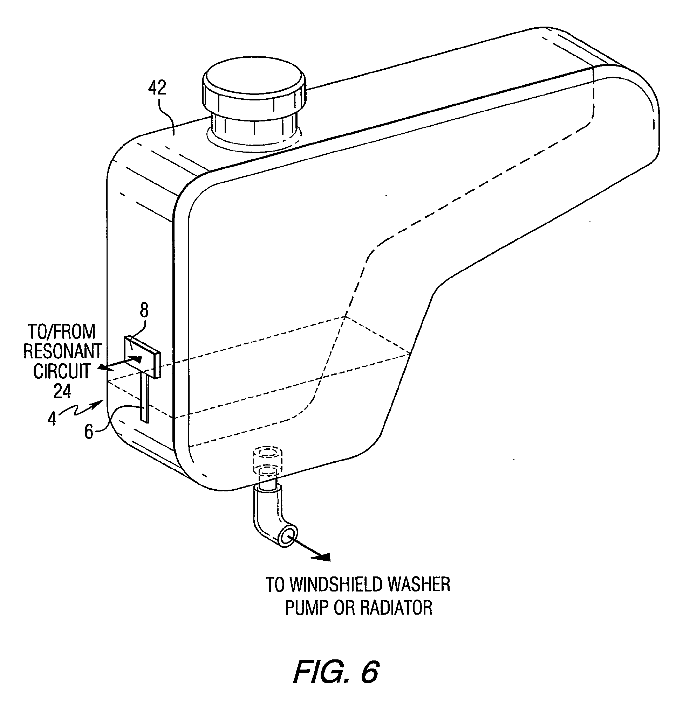

With reference to Figs. 6 and with reference back to Fig. 3, the present invention can also be utilized to detect a level of one or more fluids, such as the level of a fluid in a vehicle. Specifically, antenna 4 can be mounted on an electrically and magnetically nonconductive fluid reservoir 42. Preferably, antenna 4 is mounted on an exterior of fluid reservoir 42 adjacent a lower end thereof. However, this is not to be construed as limiting the invention. Fluid reservoir 42 can be configured to receive windshield washer fluid, radiator fluid, or any other fluid utilized by a vehicle, the level of which fluid can be measured utilizing antenna 4 and the electronic circuitry shown in Fig. 3.

In order to detect the level of fluid in fluid reservoir 42, the oscillator signal is supplied to antenna 4 when no fluid is received in fluid reservoir 42. A first response of antenna 4 to this oscillator signal is acquired and stored for later use. At suitable times when fluid is received in the fluid reservoir, a second response of antenna 4 to the oscillator signal is acquired. Each second response is compared to the first response. When a second response has a predetermined relation to the first response, the electronic circuitry outputs a corresponding control signal which activates a suitable indicator, e.g., "check washer fluid", "check radiator fluid", etc.

It is to be appreciated that decreasing the fluid level in fluid reservoir 42 decreases the difference between the first response and the second response of antenna 4. Thus, when the second response has the predetermined relation to the first response indicative of the fluid level decreasing to a predetermined level, the electronic circuitry outputs the control signal. To facilitate detecting the change in the resonant frequency of antenna 4, the predetermined frequency of the oscillator signal can be selected to optimize the change in impedance of antenna 4 in response to the presence of fluid in fluid reservoir 42. Similar comments apply in respect of the change in resonant frequency of antenna 4 due to the presence of moisture on windshield 2.

When a vehicle includes multiple antenna 4, a multiplexer (not shown) can be connected between each antenna 4 and the electronic circuitry shown in Fig. 3. Under the control of microprocessor 20, the multiplexer can selectively connect the electronic circuitry to each antenna 4 for supplying the oscillator signal at an appropriate frequency to each antenna 4 and for detecting the response of each antenna 4 to the supplied oscillator signal. Preferably, under the control of the software program, microprocessor 20 can adjust the frequency of the oscillator signal output by frequency generator 22 to optimize the change in the resonant frequency of each antenna 4 to detect the presence or absence of a particular fluid.

The invention has been described with reference to the preferred embodiments. Obvious modifications and alterations will occur to others upon reading and understanding the preceding detailed description. For example, while described in connection with the detection of moisture on windshield 2, the present invention can also be utilized to detect moisture on surfaces of rigid or flexible substrates utilized in connection with other applications. Similarly, while described in connection with detection of fluid levels in a fluid reservoir 42 mounted a vehicle, the present invention can also be utilized to detect the level of a fluid received in a fluid reservoir 42 utilized in other applications. Moreover, while described in connection with the control of windshield wiper system 30, microprocessor 20 can also be utilized to control a vehicle headlamp system, a vehicle windshield dehumidification system and/or any other vehicle on non-vehicle based system that it is desired to control as a function of the presence of moisture on a substrate. Still further, while the various components of the electronic circuitry are preferably connected by conductors, it should be appreciated that suitable signals can be conveyed between two or more these components via suitable radio frequency (RF) and/or optical signal means. Lastly, microprocessor 20 can record for subsequent retrieval and display, the days when moisture is detected on a substrate and/or the extent of operation of windshield wiper system 30. This information can then be used for information purposes, e.g., to determine the number of days in a month it rains, and/or to estimate when blades of the windshield wiper system 30 may require replacement. It is intended that the invention be construed as including all such modifications and alterations insofar as they come within the scope of the appended claims.

## Claims

1. A moisture detection system comprising:
an electrical conductor (6) mounted on a substrate (2) and having a resonant frequency that varies as a function of an amount of moisture on the substrate adjacent the electrical conductor;
electronic circuitry directly connected (8) to the electrical conductor (6) to stimulate and detect response of the electrical conductor, the electronic circuitry comprising:
an oscillator (22) which outputs an oscillator signal at a predetermined amplitude and a predetermined frequency;
a resonator circuit (24) coupled to the electrical conductor and responsive to the oscillator signal for outputting a resonator signal having an amplitude related to the resonant frequency of the electrical conductor;
a filter circuit (26) responsive to the resonator signal for outputting a rectified and filtered signal;
an analog-to-digital converter (28) responsive to the rectified and filtered signal for outputting a digital signal related to the rectified and filtered signal; and
a controller responsive to the digital signal for causing a system to operate in accordance with the digital signal.

2. The system as set forth in claim 1, wherein the system is a wiper system which is responsive to the controller for adjusting when the wiper system wipes moisture from the substrate as a function of the amount moisture on the substrate and/or a rate moisture is received on the substrate.

3. The system as set forth in claim 2, wherein:
the wiper system includes a means for wiping; and
the wiper system is responsive to the digital signal for causing the wiping means to wipe moisture from a surface of the substrate.

4. The system as set forth in claim 1, wherein:
the substrate is a vehicle windshield having a plurality of glass sheets laminated together; and
the electrical conductor is sandwiched between the glass sheets.

5. The system as set forth in claim 1, wherein the predetermined frequency is between one of (i) 300 and 700 kHz and (ii) 400 and 600 kHz.

6. The system as set forth in claim 1, wherein the resonator circuit includes:
a tank circuit having a capacitor and an inductor connected in parallel between the electrical conductor and a reference voltage; and
a resistor connected between the oscillator and the electrical conductor side of the tank circuit.

7. The system as set forth in claim 1, wherein the filter circuit includes:
a diode connected to conduct current from the resonator toward the analog-to-digital converter; and
a capacitor connected between an end of the diode adjacent the analog-to-digital converter and a reference voltage.

8. A method of moisture detection, the method comprising the steps of:
(a) providing a substrate having an electrical conductor (6) disposed thereon;
(b) stimulating the electrical conductor (6) with an oscillator signal in the absence of moisture on the substrate adjacent the electrical conductor; the oscillator signal having a predetermined amplitude and a predetermined frequency,
(c) determining a first amplitude of the electrical conductor (6) to the stimulation in step (b);
(d) stimulating the electrical conductor (6) with the oscillator signal when moisture is present on the substrate (2) adjacent the electrical conductor; the oscillator signal having a predetermined amplitude and a predetermined frequency,
(e) determining a second amplitude of the electrical conductor (6) to the stimulation in step (d), wherein the second amplitude is different than the first amplitude due to a change in resonant frequency of the electrical conductor (6) in response to the presence of moisture on the sheet of glass adjacent the electrical conductor; and
(f) determining a difference between the first amplitude and the second amplitude, wherein the difference is related to the amount of moisture on the substrate (2) adjacent the electrical conductor (6), wherein step (b) through (f) are performed by electronic circuitry directly connected to the electrical conductor.

9. The method as set forth in claim 8, further comprising the step of causing moisture to be wiped from the substrate at a rate related to the difference.

10. The method as set forth in claim 8, wherein the substrate (2) includes plural sheets of glass laminated together.

11. The method as set forth in claim 10, wherein the electrical conductor is sandwiched between two sheets of glass.

12. The method as set forth in claim 11, wherein the electrical conductor (6) is formed on a surface of one of the sheets of glass.

13. A fluid reservoir with a moisture detection system according to claim 1, comprising;
an electrical conductor (6) disposed on the fluid reservoir; and
electronic circuitry directly connected to the electrical conductor to stimulate and detect response of the electrical conductor, the electronic circuitry comprising:
means for stimulating the electrical conductor with an oscillator signal; the oscillator signal having a predetermined amplitude and a predetermined frequency; and
means responsive to the oscillator signal and the electrical conductor for detecting a change in the resonant frequency of the electrical conductor related to a level of fluid in the fluid reservoir and for outputting a control signal when the detected change in the resonant frequency of the electrical conductor corresponds to less than a desired level of fluid in the fluid reservoir.

## Patentansprüche

1. Feuchtigkeitserkennungssystem umfassend:
einen auf einem Substrat (2) montierten elektrischen Leiter (6) mit einer Resonanzfrequenz, die sich als eine Funktion einer Menge an Feuchtigkeit auf dem Substrat angrenzend an dem elektrischen Leiter verändert;
eine direkt mit dem elektrischen Leiter (6) verbundene elektronische Schaltung (8), um den elektrischen Leiter anzuregen und die Antwort zu erfassen, wobei die elektronische Schaltung umfasst:
einen Oszillator (22), welcher ein Oszillatorsignal mit einer vorgegebenen Amplitude und einer vorgegebenen Frequenz ausgibt;
einen mit dem elektrischen Leiter verbundene und auf das Oszillatorsignal antwortende Resonanzschaltung (24) zur Ausgabe eines Resonanzsignals mit einer von der Resonanzfrequenz des elektrischen Leiters abhängigen Amplitude;
eine auf das Resonanzsignal reagierende Filterschaltung (26) zur Ausgabe eines gleichgerichteten und gefilterten Signals;
einen auf das gleichgerichtete und gefilterte Signal reagierenden Analog-Digital-Wandler (28) zur Ausgabe eines dem gleichgerichteten und gefilterten Signals entsprechenden Digitalsignals; und
einen auf das digitale Signal reagierenden Controller, um den Betrieb einer Vorrichtung in Abhängigkeit von dem digitalen Signal zu veranlassen.

2. System nach Anspruch 1, wobei die Vorrichtung eine Scheibenwischanlage ist, welche auf den Controller reagiert, um einzustellen, wann die Scheibenwischanlage Feuchtigkeit von dem Substrat wischt, in Abhängigkeit von der Menge der Feuchtigkeit auf dem Substrat und/oder einer Feuchtigkeitsänderungsrate, die auf das Substrat auftrifft.

3. System gemäß Anspruch 2, wobei die Scheibenwischanlage Mittel zum Wischen aufweist und die Scheibenwischanlage auf das digitale Signal reagiert, um die Mittel zu veranlassen, Feuchtigkeit von der Oberfläche des Substrats zu wischen.

4. System gemäß Anspruch 1, bei dem das Substrat eine Fahrzeugwindschutzscheibe mit einer Mehrzahl von miteinander laminierten Glasschichten ist und der elektrische Leiter zwischen den Glasschichten eingelegt ist.

5. System gemäß Anspruch 1, wobei die vorgegebene Frequenz entweder zwischen (i) 300 und 700 kHz oder zwischen (ii) 400 und 600 kHz liegt.

6. System nach Anspruch 1, wobei die Resonanzschaltung umfasst:
eine Flüssigkeitsbehälterschaltung mit einer Kapazität und einer Induktivität in Parallelschaltung zwischen dem elektrischen Leiter und einer Referenzspannung und
einen zwischen dem Oszillator und der Seite mit dem elektrischen Leiter der Flüssigkeitsbehälterschaltung angeordneten Widerstand.

7. System nach Anspruch 1, wobei die Filterschaltung umfasst:
eine Diode, geschaltet, um den Strom von dem Resonator zu dem Analog-Digital-Wandler zu leiten und
einer zwischen einem Ende von der Diode benachbart zu dem Analog-Digital-Wandler und einer Referenzspannung geschalteten Kapazität.

8. Verfahren zur Feuchtigkeitserkennung, wobei das Verfahren folgende Schritte umfasst:
(a) Bereitstellen eines Substrats mit einem darauf angeordneten elektrischen Leiter (6),
(b) Anregen des elektrischen Leiters (6) mit einem Oszillatorsignal in Abwesenheit von Feuchtigkeit auf dem Substrat benachbart zu dem elektrischen Leiter, wobei das Oszillatorsignal eine vorgegebene Amplitude und eine vorgegebene Frequenz hat;
(c) Bestimmen einer ersten Amplitude des elektrischen Leiters (6) nach der Anregung in Schritt (b),
(d) Anregen des elektrischen Leiters (6) mit dem Oszillatorsignal, wenn Feuchtigkeit auf dem Substrat (2) benachbart zu dem elektrischen Leiter vorhanden ist, wobei das Oszillatorsignal eine vorgegebene Amplitude und eine vorgegebene Frequenz hat;
(e) Bestimmen einer zweiten Amplitude des elektrischen Leiters (6) auf die Anregung in Schritt (d), wobei die zweite Amplitude sich von der ersten Amplitude durch eine Veränderung der Resonanzfrequenz von dem elektrischen Leiter (6) in Antwort auf die Anwesenheit der Feuchtigkeit auf der Schicht des Glases benachbart zu dem elektrischen Leiter unterscheidet;
(f) Bestimmen einer Differenz zwischen der ersten Amplitude und der zweiten Amplitude, wobei der Unterschied der Menge von Feuchtigkeit auf dem Substrat (2) in der Nähe des elektrischen Leiters (6) entspricht, wobei die Schritte (b) bis (f) durch eine direkt mit dem elektrischen Leiter verbundene elektronische Schaltung ausgeführt werden.

9. Verfahren nach Anspruch 8, weiterhin umfassend den Schritt des Veranlassens, dass Feuchtigkeit von dem Substrat in einer Rate entsprechend des Unterschieds gewischt wird.

10. Verfahren nach Anspruch 8, wobei das Substrat (2) eine Mehrzahl von miteinander laminierten Glasschichten umfasst.

11. Verfahren nach Anspruch 10, wobei der elektrische Leiter zwischen zwei Glasschichten eingelegt ist.

12. Verfahren nach Anspruch 11, wobei der elektrische Leiter (6) auf einer Oberfläche einer der Glasschichten gebildet ist.

13. Flüssigkeitsbehälter mit einer Feuchtigkeitserkennungssystem gemäß Anspruch 1, umfassend:
einen auf dem Flüssigkeitsbehälter angeordneten elektrischen Leiter (6) und
eine direkt mit dem elektrischen Leiter verbundene elektronische Schaltung, um den elektrischen Leiter anzuregen und die Antwort zu erfassen, wobei die elektronische Schaltung umfasst:
Mittel zum Anregen des elektrischen Leiters mit einem Oszillatorsignal, wobei das Oszillatorsignal eine vorgegebene Amplitude und eine vorgegebene Frequenz aufweist; und
Mittel, die auf das Oszillatorsignal und den elektrischen Leiter reagieren zum Erkennen einer Änderung der Resonanzfrequenz des elektrischen Leiters, welche einem Flüssigkeitsniveau innerhalb des Flüssigkeitsbehälters entspricht, und Ausgeben eines Kontrollsignals, wenn die erkannte Änderung in der Resonanzfrequenz des elektrischen Leiters weniger als einem gewünschten Flüssigkeitsniveau innerhalb des Flüssigkeitsbehälters entspricht.

## Revendications

1. Système de détection d'humidité comprenant :
un conducteur électrique (6) monté sur un substrat (2) et ayant une fréquence de résonance qui varie en fonction d'une quantité d'humidité sur le substrat adjacent au conducteur électrique ;
un circuit électronique (8) directement connecté au conducteur électrique (6) pour stimuler et détecter une réponse du conducteur électrique, le circuit électronique comprenant :
un oscillateur (22) qui délivre un signal d'oscillateur à une amplitude prédéterminée et une fréquence prédéterminée ;
un circuit résonateur (24) couplé au conducteur électrique et sensible au signal d'oscillateur pour délivrer un signal de résonateur ayant une amplitude liée à la fréquence de résonance du conducteur électrique ;
un circuit de filtrage (26) sensible au signal de résonateur pour délivrer un signal redressé et filtré ;
un convertisseur analogique-numérique (28) sensible au signal redressé et filtré pour délivrer un signal numérique lié au signal redressé et filtré ; et
un dispositif de contrôle sensible au signal numérique pour faire fonctionner un système en fonction du signal numérique.

2. Système selon la revendication 1, dans lequel le système est un système d'essuie-glace qui est sensible au dispositif de contrôle pour régler, quand le système d'essuie-glace balaye l'humidité sur le substrat, en fonction de la quantité d'humidité sur le substrat et/ou une vitesse à laquelle l'humidité est reçue sur le substrat.

3. Système selon la revendication 2, dans lequel :
le système d'essuie-glace comprend des moyens de balayage ; et
le système d'essuie-glace est sensible au signal numérique pour forcer le moyen de balayage à balayer l'humidité d'une surface du substrat.

4. Système selon la revendication 1, dans lequel :
le substrat est un pare-brise de véhicule ayant une pluralité de feuilles de verre stratifiées ensemble ; et
le conducteur électrique est pris en sandwich entre les feuilles de verre.

5. Système selon la revendication 1, dans lequel la fréquence prédéterminée est dans un des intervalles (i) entre 300 et 700 kHz et (ii) entre 400 et 600 kHz.

6. Système selon la revendication 1, dans lequel le circuit résonateur comprend :
un circuit-bouchon ayant un condensateur et une bobine d'inductance connectés en parallèle entre le conducteur électrique et une tension de référence ; et
une résistance connectée entre l'oscillateur et le conducteur électrique du côté du circuit-bouchon.

7. Système selon la revendication 1, dans lequel le circuit de filtrage comprend :
une diode connectée pour conduire un courant du résonateur vers le convertisseur analogique-numérique ; et
un condensateur connecté entre une extrémité de la diode adjacente au convertisseur analogique-numérique et une tension de référence.

8. Procédé de détection d'humidité, le procédé comprenant les étapes consistant à :
(a) prédisposer un substrat avec un conducteur électrique (6) disposé sur celui-ci ;
(b) stimuler le conducteur électrique (6) avec un signal d'oscillateur en l'absence d'humidité sur le substrat adjacent au conducteur électrique ; le signal d'oscillateur ayant une amplitude prédéterminée et une fréquence prédéterminée,
(c) déterminer une première amplitude du conducteur électrique (6) pour la stimulation dans l'étape (b) ;
(d) stimuler le conducteur électrique (6) avec le signal d'oscillateur quand une humidité est présente sur le substrat (2) adjacent au conducteur électrique ; le signal d'oscillateur ayant une amplitude prédéterminée et une fréquence prédéterminée,
(e) déterminer une deuxième amplitude du conducteur électrique (6) pour la stimulation dans l'étape (d), dans lequel la deuxième amplitude est différente de la première amplitude à cause d'un changement de la fréquence de résonance du conducteur électrique (6) en réponse à la présence d'humidité sur la feuille de verre adjacente au conducteur électrique ; et
(f) déterminer une différence entre la première amplitude et la deuxième amplitude, dans lequel la différence est liée à la quantité d'humidité sur le substrat (2) adjacent au conducteur électrique (6), dans lequel les étapes (b) à (f) sont exécutées par un circuit électronique directement connecté au conducteur électrique.

9. Procédé selon la revendication 8, comprenant en outre l'étape consistant à commander le balayage de l'humidité du substrat à une vitesse liée à la différence.

10. Procédé selon la revendication 8, dans lequel le substrat (2) comprend plusieurs feuilles de verre stratifiées ensemble.

11. Procédé selon la revendication 10, dans lequel le conducteur électrique est pris en sandwich entre deux feuilles de verre.

12. Procédé selon la revendication 11, dans lequel le conducteur électrique (6) est formé sur une surface d'une des feuilles de verre.

13. Réservoir de fluide avec un système de détection d'humidité selon la revendication 1, comprenant :
un conducteur électrique (6) disposé sur le réservoir de fluide ; et
un circuit électronique directement connecté au conducteur électrique pour stimuler et détecter une réponse du conducteur électrique, le circuit électronique comprenant :
des moyens pour stimuler le conducteur électrique avec un signal d'oscillateur, le signal d'oscillateur ayant une amplitude prédéterminée et une fréquence prédéterminée ; et
des moyens sensibles au signal d'oscillateur et au conducteur électrique pour détecter un changement dans la fréquence de résonance du conducteur électrique liée à un niveau de fluide dans le réservoir de fluide et pour délivrer un signal de commande quand le changement détecté de la fréquence de résonance du conducteur électrique correspond à moins qu'un niveau de fluide désiré dans le réservoir de fluide.
